# FASCICULE DE BREVET EUROPEEN

(11) **EP 0 522 927 B1**
(45) Date de publication et mention de la délivrance du brevet: **05.06.1996**
(21) Numéro de dépôt: 92401861.7
(22) Date de dépôt: 30.06.1992
(51) Int. Cl.: H01M 4/80, C23C 18/08, C08J 9/40

(54) **Procédé de fabrication d'un support de type mousse pour électrode de génerateur électrochimique**
Verfahren zur Herstellung eines schaumartigen Trägers für eine Akkumulatorelektrode
Process for making a foam-type support for an electrode of a secondary battery

(30) Priorité: 01.07.1991 FR 9108164
(43) Date de publication de la demande: 13.01.1993
(73) Titulaire: SAFT, F-93230 Romainville (FR)
(72) Inventeur: Bouet, Jacques, F-75015 Paris (FR); Pichon, Bernadette, F-78140 Velizy (FR)
(74) Mandataire: Weinmiller, Jürgen

(56) Documents cités:
- US-A- 3 287 166
- CHEMICAL ABSTRACTS, vol. 94, no. 20, Mai 1981, Columbus, Ohio, US; abstract no. 159876c, SUMITOMO ELECTRIC INDUSTRIES 'Foamed Metals for Batteries' page 187 ;colonne 1

## Description

La présente invention concerne un procédé de fabrication d'un support de type mousse pour électrode de générateur électrochimique. Il s'applique en particulier aux mousses de nickel pour électrodes d'accumulateurs alcalins portables à haute énergie volumique.

Le principe du procédé est de partir d'un support en matériau organique de type mousse de polyuréthane ou analogue, de le recouvrir d'une poudre de nickel, d'effectuer un traitement thermique en atmosphère réductrice pour décomposer le matériau organique et fritter le nickel. Le but recherché est d'obtenir une texture microporeuse en nickel analogue à la texture initiale de la mousse de polyuréthane.

Le brevet français FR-A-2 558 485 propose de déposer le nickel dans les pores du support organique par une méthode d'électrodéposition. Il s'agit là d'une méthode très onéreuse.

Le brevet français FR-A-2 232 838 décrit plusieurs techniques pour réaliser l'introduction du nickel, soit par pulvérisation, soit par filtration d'une poudre de nickel ou d'une suspension de poudre de nickel dans l'eau. Ces techniques conduisent en général à un mauvais rendement de remplissage du support organique par le nickel ; de plus on n'obtient pas de couche uniforme de nickel sur la surface interne des pores de la mousse de polyuréthane.

La présente invention a pour but de proposer une méthode simple permettant de réaliser un dépôt uniforme de métal sur une mousse en matériau organique.

La présente invention a pour objet un procédé de réalisation d'un support de type mousse en un métal choisi parmi le nickel, le cuivre et le plomb, procédé selon lequel on part d'un support de type mousse en matériau organique à base de polyuréthane, de polyester ou de polyéther, on applique ledit métal sur ledit support en matériau organique et on effectue un traitement thermique pour éliminer ledit matériau organique, caractérisé par le fait que
- ladite mousse en matériau organique présente une porosité de l'ordre de 96 % à 98 % avec une taille de pores comprise entre 200 et 400 micromètres,
- on imprègne cette mousse en matériau organique par une solution d'un nitrate ou d'un sulfate dudit métal, la concentration de ladite solution étant choisie en fonction du grammage souhaité par ladite mousse en métal,
- on effectue un traitement thermique sous atmosphère légèrement réductrice.

Ainsi pour l'obtention d'une mousse de nickel de grammage compris entre 2 g/dm2 et 6 g/dm2, la concentration de ladite solution de nitrate ou de sulfate de nickel est comprise entre 2,5 et 6 moles par litre.

Pour faciliter l'imprégnation de la mousse en matériau organique, ladite solution peut contenir un hydroxycolloïde dans une proportion de 0,5 % à 2 % en poids. Cet hydroxycolloïde peut être choisi parmi la carboxyméthylcellulose et le xanthane éventuellement associé à la caroube.

Selon un mode de réalisation préférentiel ladite solution se trouve à une température de l'ordre de 80°C et l'imprégnation est suivie d'un rapide refroidissement sous air pour cristalliser ledit sel dans lesdits pores.

Le simple choc thermique dû au passage de la cuve d'imprégnation à l'atmosphère ambiante suffit à amorcer la nucléation et la croissance de petits cristaux.

La mousse organique ainsi imprégnée est ensuite traitée thermiquement pendant deux heures dans un four sous atmosphère légèrement réductrice, par exemple à base d'azote contenant 10 % d'hydrogène. Il peut être préférable de laisser barboter ce gaz réducteur dans de l'eau chauffée vers 80°C, afin d'éliminer toute trace du composé organique du support initial.

Ce traitement comporte :
- un premier palier d'une demi-heure à 200°C pour éliminer l'eau du sel et les vapeurs nitreuses (cas d'une solution de nitrate),
- un deuxième palier d'une demi-heure à 450°C pour éliminer l'hydroxycolloïde (se trouvant éventuellement dans la solution),
- un troisième palier d'une heure à 1050°C pour éliminer le support organique.

Le procédé selon l'invention permet de réaliser des mousses de nickel de bonne qualité présentant un grammage allant de 2 g/dm2 à 6g/dm2.

D'autres caractéristiques et avantages de la présente invention apparaîtront au cours de la description suivante de modes de réalisation donnés à titre illustratif mais nullement limitatif.

Dans tous les exemples on partira d'une mousse de polyuréthane d'épaisseur 1,5 mm, avec une porosité de 96 % et un diamètre de pores compris entre 200 et 400 micromètres.
Exemple 1 : Pour obtenir une mousse de nickel de grammage égal à 5g/dm2, on imprègne la mousse de polyuréthane par une solution concentrée de nitrate de nickel à 5 moles/litre à une température de 80°C ; cette solution contient 0,5 % en poids de carboxyméthylcellulose.
   Après le traitement thermique précisé plus haut, la mousse de nickel de grammage 5g/dm2 présente une porosité de 96 %.
Exemple 2 : Pour obtenir une mousse de nickel de grammage égal à 2 g/dm2, on imprègne la mousse de polyuréthane par une solution de nitrate de nickel à 2,5 moles/litre épaissie par la carboxyméthylcellulose (teneur 1,5 % en poids). On effectue un séchage à une température de l'ordre de 30°C qui aboutit au dépôt d'un film concentré en nickel qui tapisse les pores de la mousse de polyuréthane. Après le traitement thermique précité, on obtient une mousse de nickel de porosité 96 %.
Exemple 3 : Les conditions sont analogues à celles de l'exemple 2, mais la carboxyméthylcellulose est remplacée par un mélange 50/50 de xanthane et de caroube.

Bien entendu l'invention n'est pas limitée aux exemples qui viennent d'être décrits. En particulier on peut remplacer les nitrates par des sulfates et le nickel par du cuivre ou du plomb.

## Revendications

1. Procédé de réalisation d'un support de type mousse en un métal choisi parmi le nickel, le cuivre et le plomb, procédé selon lequel on part d'un support de type mousse en matériau organique à base de polyuréthane, de polyester ou de polyéther, on applique ledit métal sur ledit support en matériau organique et on effectue un traitement thermique pour éliminer ledit matériau organique, caractérisé par le fait que
- ladite mousse en matériau organique présente une porosité de l'ordre de 96 % à 98 % avec une taille de pores comprise entre 200 et 400 micromètres,
- on imprègne cette mousse en matériau organique par une solution d'un nitrate ou d'un sulfate dudit métal, la concentration de ladite solution étant choisie en fonction du grammage souhaité par ladite mousse en métal,
- on effectue un traitement thermique sous atmosphère légèrement réductrice.

2. Procédé de réalisation selon la revendication 1, caractérisé par le fait que, pour l'obtention d'une mousse de nickel de grammage compris entre 2 g/dm2 et 6 g/dm2, la concentration de ladite solution de nitrate ou de sulfate de nickel est comprise entre 2,5 et 6 moles par litre.

3. Procédé de réalisation selon la revendication 2, caractérisé par le fait que ladite solution se trouve à une température de l'ordre de 80°C et que l'imprégnation est suivie d'un rapide refroidissement sous air pour cristalliser ledit sel dans lesdits pores.

4. Procédé de réalisation selon l'une des revendications précédentes, caractérisé par le fait que ladite solution contient un hydroxycolloïde dans une proportion comprise entre 0,5 % et 2 % en poids.

5. Procédé de réalisation selon la revendication 4, caractérisé par le fait que ledit hydroxycolloïde est choisi parmi la carboxyméthylcellulose et le xanthane éventuellement associé à la caroube.

6. Procédé de réalisation selon l'une des revendications précédentes caractérisé par le fait que ledit traitement thermique comprend :
- un premier palier d'une demi-heure à 200°C,
- un second palier d'une demi-heure à 450°C,
- un troisième palier d'une heure à 1050°C pour éliminer ledit support en matériau organique.

## Claims

1. A method of manufacturing a sponge-type support made of a metal chosen from nickel, copper, and lead, in which method a sponge-type support made of an organic material based on polyurethane, polyester, or polyether is used, said metal is applied onto said support made of an organic material, and heat treatment is performed to remove said organic material, said method being characterized by the facts that:
said sponge made of an organic material has a porosity lying in the range 96% to 98% with a pore-size lying in the range 200 µm to 400 µm;
the sponge made of an organic material is impregnated with a solution of a nitrate or a sulfate of said metal, the concentration of said solution being chosen as a function of the desired weight per unit area for said sponge made of metal; and
heat treatment is performed in a slightly reducing atmosphere.

2. A method according to claim 1, characterized by the fact that, in order to obtain a nickel sponge having a weight per unit area lying in the range 2 g/dm² to 6 g/dm², the concentration of said nickel nitrate solution or said nickel sulfate solution lies in the range 2·5 moles per liter to 6 moles per liter.

3. A method according to claim 2, characterized by the facts that said solution is at a temperature of the order of 80°C, and the impregnation is followed by fast cooling in air to crystallize said salt in said pores.

4. A method according to any preceding claim, characterized by the fact that said solution contains a hydroxycolloid at a concentration lying in the range 0.5% to 2% by weight.

5. A method according to claim 4, characterized by the fact that said hydroxycolloid is chosen from carboxymethyl cellulose, and xanthan optionally associated with carob.

6. A method according to any preceding claim, characterized by the fact that said heat treatment comprises:
a half-hour first period at 200°C;
a half-hour second period at 450°C; and
a one-hour third period at 1,050°C to remove said support made of an organic material.

## Patentansprüche

1. Verfahren zur Herstellung eines schaumartigen Trägers aus einem Metall, das aus Nickel, Kupfer und Blei ausgewählt wird, wobei man von einem schaumartigen Träger aus einem organischen Material auf der Basis von Polyurethan, Polyester oder Polyäther ausgeht, dann das Metall auf den Träger aus organischem Material aufbringt und schließlich eine Wärmebehandlung durchführt, um das organische Material zu entfernen, dadurch gekennzeichnet,
- daß der Schaum aus organischem Material eine Porosität in der Größenordnung von 96% bis 98% mit einer Porengröße zwischen 200 und 400 Mikrometer aufweist,
- daß man diesen Schaum aus organischem Material mit einer Lösung eines Nitrats oder eines Sulfats des Metalls tränkt, wobei die Konzentration der Lösung in Abhängigkeit von der gewünschten spezifischen Belegung des Metallschaums abhängt,
- und daß man eine Wärmebehandlung unter einer leicht reduzierenden Atmosphäre durchführt.

2. Herstellungsverfahren nach Anspruch 1, dadurch gekennzeichnet, daß die Konzentration der Lösung von Nickelnitrat oder Nickelsulfat zwischen 2,5 und 6 Mol je Liter liegt, um einen Nickelschaum einer spezifischen Belegung von zwischen 2g/dm² und 6 g/dm² zu erhalten.

3. Herstellungsverfahren nach Anspruch 2, dadurch gekennzeichnet, daß die Lösung eine Temperatur von etwa 80°C hat, und auf die Imprägnierung folgt eine rasche Abkühlung in Gegenwart von Luft, um das Salz in den Poren zu kristallisieren.

4. Herstellungsverfahren nach einem der vorhergehenden Ansprüche, dadurch gekennzeichnet, daß die Lösung ein Hydroxykolloid mit einem Anteil zwischen 0,5 und 2 Gew.% enthält.

5. Herstellungsverfahren nach Anspruch 4, dadurch gekennzeichnet, daß das Hydroxykolloid aus Carboxymethylcellulose und Xanthan, eventuell mit Johannisbrot, ausgewählt wird.

6. Herstellungsverfahren nach einem der vorhergehenden Ansprüche, dadurch gekennzeichnet, daß die Wärmebehandlung enthält:
- eine erste Stufe von einer halben Stunde auf 200°C,
- eine erste Stufe von einer halben Stunde auf 450°C,
- eine dritte Stufe von einer Stunde auf 1050°C, um den organischen Träger zu entfernen.
